# EUROPÄISCHE PATENTSCHRIFT

(11) **EP 3 073 887 B1**
(45) Veröffentlichungstag und Bekanntmachung des Hinweises auf die Patenterteilung: **18.10.2017**
(21) Anmeldenummer: 14799172.3
(22) Anmeldetag: 18.11.2014
(51) Int. Cl.: A47L 15/42

(54) **FILTERANORDNUNG FÜR EIN WASSERFÜHRENDES HAUSHALTSGERÄT, PUMPENTOPF FÜR EIN WASSERFÜHRENDES HAUSHALTSGERÄT, SPÜLBEHÄLTER FÜR EIN WASSERFÜHRENDES HAUSHALTSGERÄT UND WASSERFÜHRENDES HAUSHALTSGERÄT**
FILTER ASSEMBLY FOR A WATER-BEARING DOMESTIC APPLIANCE, PUMP WELL FOR A WATER-BEARING DOMESTIC APPLIANCE, WASHING CONTAINER FOR A WATER-BEARING DOMESTIC APPLIANCE, AND WATER-BEARING DOMESTIC APPLIANCE
ARRANGEMENT DE FILTRE POUR UN APPAREIL MÉNAGER VÉHICULANT DE L'EAU, CREUSET DE POMPE POUR UN APPAREIL MÉNAGER VÉHICULANT DE L'EAU, CUVE DE RINÇAGE POUR UN APPAREIL MÉNAGER VÉHICULANT DE L'EAU ET APPAREIL MÉNAGER VÉHICULANT DE L'EAU

(30) Priorität: 29.11.2013 DE 102013224563
(43) Veröffentlichungstag der Anmeldung: 05.10.2016
(73) Patentinhaber: BSH Hausgeräte GmbH, 81739 München (DE)
(72) Erfinder: ARNOLD, Matthias, 89415 Lauingen (DE); NANNT, Hans-Peter, 89547 Gerstetten (DE); PAINTNER, Kai, 86465 Welden (DE)
(86) Internationale Anmeldenummer: PCT/EP2014/074906
(87) Internationale Veröffentlichungsnummer: WO 2015/078733

(56) Entgegenhaltungen:
- EP-A1- 0 474 365
- EP-A1- 0 779 090
- WO-A1-2006/117201
- DE-A1- 1 442 422
- US-A- 3 491 780

## Beschreibung

Die vorliegende Erfindung betrifft eine Filteranordnung für ein wasserführendes Haushaltsgerät, einen Pumpentopf für ein wasserführendes Haushaltsgerät, einen Spülbehälter für ein wasserführendes Haushaltsgeräts und ein wasserführendes Haushaltsgerät. Das wasserführende Haushaltsgerät ist insbesondere eine Geschirrspülmaschine.

Eine Geschirrspülmaschine kann einen Spülbehälter und einen an einem Boden des Spülbehälters angeordneten Pumpentopf umfassen. An dem Pumpentopf können eine Laugenpumpe sowie eine Heizpumpe vorgesehen sein. In dem Pumpentopf kann eine Filteranordnung mit einem Filtersieb angeordnet sein. Im Betrieb der Geschirrspülmaschine setzt sich das Filtersieb allmählich mit Verschmutzungen zu. Zum Reinigen des Filtersiebs kann dieses aus dem Pumpentopf entnommen und beispielsweise manuell gereinigt werden.

Die WO 2006/117201 A1 beschreibt eine Geschirrspülmaschine mit einer Elektrolysezelle, die in einem Spülflottenkreislauf der Geschirrspülmaschine integriert ist. Die Elektrolysezelle weist eine Elektrode auf, die als Diamantelektrode ausgeführt sein kann. An der Elektrode bilden sich Hydroxide, die zum Reinigen, Entkeimen und Desinfizieren des Spülguts geeignet sind.

Vor diesem Hintergrund besteht eine Aufgabe der vorliegenden Erfindung darin, eine verbesserte Filteranordnung für ein wasserführendes Haushaltsgerät zur Verfügung zu stellen.

Demgemäß wird eine Filteranordnung für ein wasserführendes Haushaltsgerät, insbesondere für eine Geschirrspülmaschine vorgeschlagen. Die Filteranordnung umfasst ein als erste Elektrode geschaltetes Filtersieb und eine zweite Elektrode, wobei zum elektrochemischen Reinigen des Filtersiebs zwischen dem Filtersieb und der zweiten Elektrode eine elektrische Spannung anlegbar ist.

Die Filteranordnung kann ferner eine Spannungsquelle, insbesondere eine Gleichspannungsquelle, umfassen. Die Spannungsquelle kann dazu eingerichtet sein, zwischen dem Filtersieb und der zweiten Elektrode eine konstante und/oder pulsierende Spannung anzulegen. Insbesondere entspricht das Filtersieb der ersten Elektrode. Mit Hilfe des Anlegens der elektrischen Spannung ist eine Spülflotte des wasserführenden Haushaltsgeräts hydrolysierbar. Dadurch, dass zwischen dem Filtersieb und der zweiten Elektrode eine elektrische Spannung anlegbar ist, sind bei der Hydrolyse der Spülflotte zwei Effekte gleichzeitig nutzbar. Zum einen kann das Filtersieb elektrochemisch gereinigt werden und zum anderen kann ein Oxidationsmittel bzw. ein Bakterizid zum Reinigen und/oder Desinfizieren des Spülguts erzeugt werden.

Gemäß einer Ausführungsform sind zum elektrochemischen Reinigen des Filtersiebs an dem Filtersieb mit Hilfe der elektrischen Spannung Gasbläschen erzeugbar.

Insbesondere ist an dem Filtersieb Wasserstoffgas erzeugbar. Vorzugsweise bildet sich das Wasserstoffgas an einer Grenzschicht zwischen dem Filtersieb und an dem Filtersieb anhaftendem Schmutz. Hierdurch wird der an dem Filtersieb anhaftende Schmutz von diesem abgesprengt. Ferner verhindert das sich bildende Wasserstoffgas, dass sich erneut Verschmutzungen auf dem Filtersieb ablagern.

Gemäß einer weiteren Ausführungsform ist das Filtersieb eine Kathode und die zweite Elektrode eine Anode.

Das Filtersieb ist insbesondere mit einem Plus-Pol der Spannungsquelle und die zweite Elektrode ist insbesondere mit einem Minus-Pol der Spannungsquelle elektrisch leitend verbunden. Dadurch, dass das Filtersieb als Kathode geschaltet ist, wird ein elektrolytischer Materialabtrag von dem Filtersieb unterbunden. Hierdurch wird ein Verschleiß des Filtersiebs verhindert. An der Anode werden vorzugsweise Oxidationsmittel wie z.B. Hydroxylradikale gebildet.

Gemäß einer weiteren Ausführungsform ist die zweite Elektrode eine bordotierte Diamantelektrode.

Insbesondere ist die zweite Elektrode eine bordotierte Diamantanode. Durch ihre Materialeigenschaften ist die bordotierte Diamantelektrode selbst bei der Schaltung als Anode vor einem elektrochemischen Materialabtrag geschützt. Ferner können durch die Materialeigenschaften der bordotierten Diamantanode insbesondere Hydroxidradikale mit einem hohen elektrochemischen Potential von 2,8 Volt direkt erzeugt werden. Hydroxidradikale sind mit anderen Elektrodenmaterialien nicht direkt erzeugbar. Ferner werden auch andere Oxidationsmittel bei einem derart hohen Potential erzeugt.

Gemäß einer weiteren Ausführungsform ist das Filtersieb rohrförmig.

Das Filtersieb kann eine geschlossene oder offene Stirnseite aufweisen. Das Filtersieb kann gitterförmig oder rohrförmig mit einer gelochten zylinderförmigen Wand sein.

Gemäß einer weiteren Ausführungsform ist die zweite Elektrode stabförmig, wobei die zweite Elektrode zumindest teilweise in dem Filtersieb aufgenommen ist.

Insbesondere ist die zweite Elektrode stiftförmig. Die zweite Elektrode kann auch plattenförmig sein. Die zweite Elektrode kann insbesondere mittig in dem Filtersieb aufgenommen sein. Die zweite Elektrode kann beispielsweise einen kreisrunden Querschnitt aufweisen. Die zweite Elektrode kann alternativ einen vieleckigen Querschnitt aufweisen. Die zweite Elektrode kann mehrere Elektrodenabschnitte aufweisen, die beispielsweise gleichmäßig verteilt in dem Filtersieb angeordnet sind. Hierdurch wird die Oberfläche der zweiten Elektrode vergrößert, wodurch mehr Oxidationsmittel erzeugbar sind.

Gemäß einer weiteren Ausführungsform ist die zweite Elektrode rohrförmig, wobei das Filtersieb zumindest teilweise in der zweiten Elektrode aufgenommen ist.

Hierdurch wird die Oberfläche der zweiten Elektrode ebenfalls vergrößert, wodurch mehr Oxidationsmittel erzeugbar sind. Unter rohrförmig kann vorliegend verstanden werden, dass die zweite Elektrode eine zylinderförmige, das Filtersieb vollständig umlaufende Wand ausbildet. Alternativ kann die zweite Elektrode mehrere Elektrodenabschnitte aufweisen, die außenseitig um die erste Elektrode verteilt positioniert sind. Die Elektrodenabschnitte der zweiten Elektrode können gleichmäßig oder ungleichmäßig um einen Umfang des Filtersiebs verteilt angeordnet sein.

Gemäß einer weiteren Ausführungsform ist die elektrische Spannung zwischen dem Filtersieb und der zweiten Elektrode gepulst anlegbar.

Hierdurch ist es insbesondere möglich, stark an dem Filtersieb anhaftende Schmutzanteile besser entfernen zu können.

Gemäß einer weiteren Ausführungsform weist die Filteranordnung ferner eine Ultraschalleinrichtung zum mechanischen Reinigen des Filtersiebs auf.

Die Ultraschalleinrichtung ist optional. Die Ultraschalleinrichtung kann beispielsweise außenseitig an dem Pumpentopf angeordnet sein. Mit Hilfe der Ultraschalleinrichtung ist zusätzlich zur elektrochemischen Reinigung des Filtersiebs auch eine mechanische Reinigung desselben möglich. Hierdurch wird die Reinigungswirkung verstärkt.

Gemäß einer weiteren Ausführungsform ist das Filtersieb aus einem Metallwerkstoff gefertigt.

Das Filtersieb kann beispielsweise aus einem Metallblech gefertigt sein. Insbesondere weist das Filtersieb einen rostfreien Stahlwerkstoff auf.

Gemäß einer weiteren Ausführungsform ist das Filtersieb aus einem metallbeschichteten Kunststoffwerkstoff gefertigt.

Beispielsweise kann das Filtersieb ein verchromtes Kunststoffspritzgussbauteil sein. Hierdurch kann das Filtersieb kostengünstig in großen Stückzahlen hergestellt werden.

Weiterhin wird ein Pumpentopf für ein wasserführendes Haushaltsgerät, insbesondere für eine Geschirrspülmaschine, vorgeschlagen. Der Pumpentopf weist eine derartige Filteranordnung auf, wobei die Filteranordnung zumindest teilweise in dem Pumpentopf aufgenommen ist.

Der Pumpentopf ist beispielsweise ein Kunststoffspritzgussbauteil. Alternativ kann der Pumpentopf ein Metallbauteil sein.

Gemäß einer Ausführungsform weist der Pumpentopf zumindest eine elektrische Kontaktstelle auf, mit der das Filtersieb elektrisch leitend verbindbar ist.

Die zumindest eine elektrische Kontaktstelle kann beispielsweise an einer Bodenwand des Pumpentopfs vorgesehen sein. Vorzugsweise sind mehrere derartige elektrische Kontaktstellen vorgesehen. Beispielsweise kann die elektrische Kontaktstelle ringförmig ausgebildet sein, so dass das Filtersieb umlaufend mit der zumindest einen elektrischen Kontaktstelle elektrisch leitend verbindbar ist. Das Filtersieb kann beispielsweise auf die zumindest eine elektrische Kontaktstelle zum Herstellen einer elektrisch leitenden Verbindung aufgelegt sein. Alternativ kann die elektrisch leitende Kontaktstelle als ein Stecker oder eine Buchse ausgebildet sein, in den oder die das Filtersieb einsteckbar ist.

Weiterhin wird ein Spülbehälter für ein wasserführendes Haushaltsgerät, insbesondere für eine Geschirrspülmaschine vorgeschlagen. Der Spülbehälter weist eine derartige Filteranordnung und/oder einen derartigen Pumpentopf auf.

Der Spülbehälter ist vorzugsweise quaderförmig. Der Spülbehälter kann aus einem Stahlblech gefertigt sein. Insbesondere ist der Spülbehälter mit Hilfe einer Tür wasserdicht verschließbar. Der Pumpentopf ist vorzugsweise an einem Boden des Spülbehälters vorgesehen.

Ferner wird ein wasserführendes Haushaltsgerät, insbesondere eine Geschirrspülmaschine, vorgeschlagen. Das wasserführende Haushaltsgerät umfasst eine derartige Filteranordnung, einen derartigen Pumpentopf und/oder einen derartigen Spülbehälter.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt eine schematische perspektivische Ansicht einer Ausführungsform eines Haushaltsgeräts;
- Fig. 2: zeigt eine schematische Schnittansicht einer Ausführungsform eines Pumpentopfs des Haushaltsgeräts gemäß der Fig. 1;
- Fig. 3: zeigt eine schematische Schnittansicht einer weiteren Ausführungsform eines Pumpentopfs des Haushaltsgeräts gemäß der Fig. 1; und
- Fig. 4: zeigt eine schematische Schnittansicht einer weiteren Ausführungsform eines Pumpentopfs des Haushaltsgeräts gemäß der Fig. 1.

In den Figuren sind gleiche oder funktionsgleiche Elemente mit denselben Bezugszeichen versehen worden, sofern nichts anderes angegeben ist.

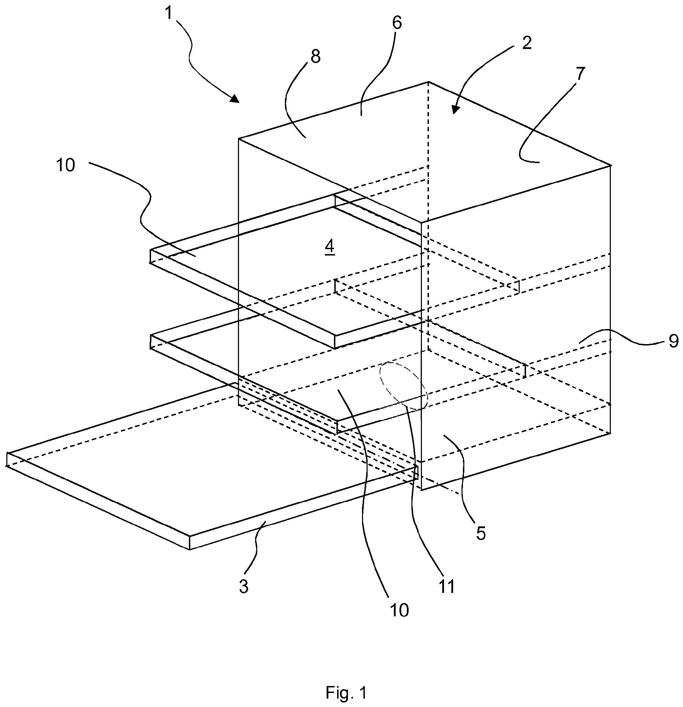

Die Fig. 1 zeigt eine schematische perspektivische Ansicht eines, insbesondere wasserführenden, Haushaltsgeräts 1. Das Haushaltsgerät 1 ist insbesondere eine Geschirrspülmaschine. Das Haushaltsgerät 1 weist einen Spülbehälter 2 auf, der durch eine Tür 3, insbesondere wasserdicht, verschließbar ist. Der Spülbehälter 2 und die Tür 3 können eine Spülkammer 4 zum Spülen von Spülgut bilden. Der Spülbehälter 2 kann im Inneren eines Gehäuses des Haushaltsgeräts 1 angeordnet sein. Die Tür 3 ist in der Fig. 1 in ihrer geöffneten Stellung dargestellt. Durch Schwenken um eine am unteren Ende der Tür 3 vorgesehene Schwenkachse kann die Tür 3 geschlossen oder geöffnet werden.

Der Spülbehälter 2 weist einen Boden 5, eine dem Boden 5 gegenüberliegende Decke 6, eine der Tür 3 gegenüberliegende Rückwand 7 und zwei einander gegenüberliegende Seitenwände 8, 9 auf. Der Spülbehälter 2 ist insbesondere quaderförmig. Das Haushaltsgerät 1 weist weiterhin zumindest eine Beladungsebene 10 auf. Die Beladungsebene 10 ist wahlweise in den Spülbehälter 2 hinein oder aus diesem heraus verlagerbar. Die Beladungsebene 10 ist vorzugsweise eine Spülgutaufnahme des Haushaltsgeräts 1. Insbesondere können mehrere Beladungsebenen vorgesehen sein, wobei jeweils eine der mehreren Beladungsebenen 10 ein Unterkorb, ein Oberkorb oder eine Besteckschublade des Haushaltsgeräts 1 sein kann. Die mehreren Beladungsebenen 10 sind vorzugsweise übereinander in dem Spülbehälter 2 angeordnet. Das Haushaltsgerät 1 weist ferner einen an dem Boden 5 vorgesehenen Pumpentopf 11 auf. Der Pumpentopf 11 kann materialeinstückig mit dem Spülbehälter 2, insbesondere mit dem Boden 5, ausgebildet sein.

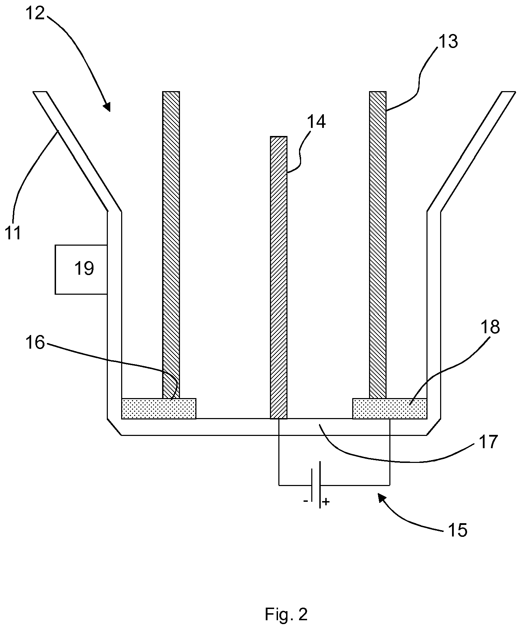

Die Fig. 2 zeigt in einer schematischen Schnittansicht eine Detailansicht des Pumpentopfs 11. Der Pumpentopf 11 weist eine Filteranordnung 12 auf. Die Filteranordnung 12 umfasst eine erste Elektrode bzw. ein Filtersieb 13. Insbesondere ist das Filtersieb 13 als erste Elektrode geschaltet. Die Filteranordnung 12 umfasst weiterhin eine zweite Elektrode 14. Ferner weist die Filteranordnung 12 eine Spannungsquelle 15 auf. Die Spannungsquelle 15 ist vorzugsweise eine Gleichspannungsquelle. Die Spannungsquelle 15 kann dazu eingerichtet sein, eine konstante und/oder eine gepulste Spannung an das Filtersieb 13 und an die zweite Elektrode 14 anzulegen. Die erste Elektrode bzw. das Filtersieb 13 ist vorzugsweise mit einem Plus-Pol der Spannungsquelle 15 elektrisch leitend verbunden. Das heißt, das Filtersieb 13 ist als Kathode geschaltet. Die zweite Elektrode 14 ist mit einem Minus-Pol der Spannungsquelle 15 elektrisch leitend verbunden. Das heißt, die zweite Elektrode 14 ist als Anode geschaltet.

Das Filtersieb 13 kann aus einem Metallwerkstoff gefertigt sein. Alternativ kann das Filtersieb 13 aus einem metallbeschichteten Kunststoffwerkstoff gefertigt sein. Beispielsweise kann das Filtersieb 13 ein chrombeschichtetes Kunststoffspritzgussbauteil sein. Der Pumpentopf 11 ist insbesondere ein Kunststoffbauteil. Vorzugsweise ist der Pumpentopf 11 ein Kunststoffspritzgussbauteil. Alternativ kann der Pumpentopf 11 ein Metallbauteil sein.

Mit Hilfe der Spannungsquelle 15 ist zum elektrochemischen Reinigen des Filtersiebs 13 zwischen dem Filtersieb 13 und der zweiten Elektrode 14 eine elektrische Spannung anlegbar. Das Filtersieb 13 ist vorzugsweise zylinderförmig, insbesondere rohrförmig. Eine Stirnseite 16 des Filtersiebs kann offen oder geschlossen sein. Der Pumpentopf 11 kann an einer Bodenwand 17 zumindest eine elektrische Kontaktstelle 18 aufweisen, mit der das Filtersieb 13 elektrisch leitend verbindbar ist. Vorzugsweise sind mehrere derartige Kontaktstellen 18 vorgesehen. Ferner kann eine einzige ringförmige Kontaktstelle 18 vorgesehen sein, die die Stirnseite 16 des Filtersiebs 13 umlaufend kontaktiert. Das Filtersieb 13 kann auf der zumindest einen Kontaktstelle 18 aufgelegt sein. Alternativ kann die Kontaktstelle 18 als Stecker oder Buchse ausgebildet sein, in den oder in die ein korrespondierendes Gegenstück des Filtersiebs 13 einsteckbar ist. Die zumindest eine Kontaktstelle 18 kann beispielsweise mit dem Kunststoffmaterial des Pumpentopfs 11 umspritzt sein.

Die zweite Elektrode 14 ist vorzugsweise eine bordotierte Diamantelektrode, insbesondere eine bordotierte Diamantanode. Die zweite Elektrode 14 kann, wie die Fig. 2 zeigt, stabförmig sein. Vorzugsweise ist die zweite Elektrode 14 zumindest teilweise in dem Filtersieb 13 aufgenommen. Beispielsweise kann die zweite Elektrode 14 mittig in der ersten Elektrode bzw. in dem Filtersieb 13 aufgenommen sein.

Optional kann an dem Pumpentopf 11 eine Ultraschalleinrichtung 19 vorgesehen sein. Die Ultraschalleinrichtung 19 ist vorzugsweise außenseitig an dem Pumpentopf 11 angeordnet. Die Ultraschalleinrichtung 19 ist dazu eingerichtet, das Filtersieb 13 zusätzlich zur elektrochemischen Reinigung mechanisch von Schmutz zu reinigen. Die Filteranordnung 12 kann die Ultraschalleinrichtung 19 umfassen.

Die Funktion der Filteranordnung 12 wird im Folgenden erläutert. Dadurch, dass die erste Elektrode bzw. das Filtersieb 13 als Kathode geschaltet und die zweite Elektrode 14 als Anode geschaltet ist, wird die sich im Pumpentopf 11 befindende Spülflotte hydrolysiert. Die Spülflotte kann ein Gemisch aus Reinigungsmitteln und/oder Reinigungssalzen und Wasser sein. Die elektrische Leitfähigkeit der Spülflotte wird insbesondere durch das Vorhandensein von Reinigungsmitteln verbessert. Bei der Hydrolyse der Spülflotte bilden sich an der als bordotierte Diamantanode ausgebildeten zweiten Elektrode 14 Oxidationsmittel wie beispielsweise Ozon, Hydroxidradikale oder andere Radikale. Diese entstehenden Oxidationsmittel können beispielsweise dem Bleichen von in der Spülflotte gelösten Farbstoffen dienen. Ferner kann durch die Oxidationsmittel der chemische Sauerstoffbedarf (CBS-Wert), der biologische Sauerstoffbedarf nach fünf Tagen (BSB₅-Wert) und/oder der gesamte organische Kohlenstoff-Wert (TOC-Wert) der Spülflotte gesenkt werden. Weiterhin können die gebildeten Oxidationsmittel einen bakteriziden Effekt haben.

An dem als Kathode geschalteten Filtersieb 13 bilden sich mit Hilfe der elektrischen Spannung Gasbläschen aus. Insbesondere bildet sich an dem Filtersieb 13 Wasserstoffgas in Form von kleinen Bläschen. Der molekulare Wasserstoff bildet sich vorzugsweise an der Grenzfläche zwischen dem Filtersieb 13 und auf diesem anhaftendem Schmutz. Hierdurch werden abgelagerte Schmutzpartikel von dem Filtersieb 13 abgesprengt. Ferner verhindern die von dem Filtersieb 13 aufsteigenden Gasbläschen eine Neuanhaftung von Schmutz an dem Filtersieb 13. Dadurch, dass die erste Elektrode bzw. das Filtersieb 13 als Kathode geschaltet ist, findet an dieser kein Materialabtrag statt.

Die Materialeigenschaften der bordotierten Diamantelektrode verhindern einen Materialabtrag von der als Anode geschalteten zweiten Elektrode 14. Insbesondere können durch die Verwendung der Diamantanode Hydroxidradikale mit einem elektrochemischen Potential von 2,8 Volt direkt erzeugt werden, die mit alternativen Elektrodenmaterialien nur über Umwege herstellbar sind. Die elektrische Spannung kann mit Hilfe der Spannungsquelle 15 zu unterschiedlichen Zeitpunkten eines Spülzyklus des Haushaltsgeräts 1 eingesetzt werden. Beispielsweise kann die Elektrolyse während des gesamten Spülzyklus durchgeführt werden. Hierdurch kann verhindert werden, dass sich auf dem Filtersieb 13 Verschmutzungen ablagern. Gleichzeitig wird mit Hilfe der Diamantanode stets Oxidationsmittel zur Verfügung gestellt. Alternativ kann die Elektrolyse nur während des Abpumpens der Spülflotte eingesetzt werden. Hierdurch wird eine übermäßige Entstehung von Wasserstoffgas verhindert. In einer weiteren Ausführungsform ist die elektrische Spannung zwischen dem Filtersieb 13 und der zweiten Elektrode 14 gepulst anlegbar. Hierdurch können insbesondere stark anhaftende Schmutzpartikel besser entfernt werden. Vor der Elektrolyse kann beispielsweise aus dem Ionentauscher des Haushaltsgeräts etwas Salzlösung in die Spülflotte abgegeben werden, um an der zweiten Elektrode 14 Chlor und/oder Hypochlorit zu erzeugen.

Optional kann die elektrolytische Reinigung des Filtersiebs 13 mit Hilfe der Ultraschalleinrichtung 19 mit einer Ultraschallreinigung kombiniert werden. Mit der Filteranordnung 12 können zwei Effekte gleichzeitig genutzt werden. Das Filtersieb 13 kann einerseits sauber gehalten und gleichzeitig kann an der zweiten Elektrode 14 ein Oxidationsmittel bzw. Bakterizid erzeugt werden.

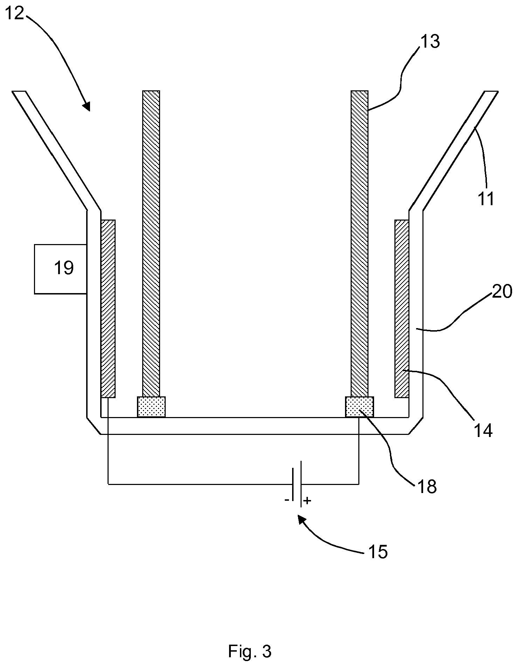

Die Fig. 3 zeigt eine schematische Schnittansicht einer weiteren Ausführungsform der Filteranordnung 12. Die Ausführungsform der Filteranordnung 12 gemäß der Fig. 3 unterscheidet sich von der Ausführungsform der Filteranordnung 12 gemäß der Fig. 2 dadurch, dass die zweite Elektrode 14 außerhalb des Filtersiebs 13 angeordnet ist. Insbesondere kann die zweite Elektrode 14 rohrförmig ausgebildet sein, wobei die erste Elektrode bzw. das Filtersieb 13 zumindest teilweise in der zweiten Elektrode 14 aufgenommen ist. Insbesondere ist die zweite Elektrode 14 an einer zylinderförmigen Seitenwand 20 des Pumpentopfs 11 angeordnet. Beispielsweise kann die zweite Elektrode 14 mit Material des Pumpentopfs 11 umspritzt sein. Unter einer rohrförmigen Form der zweiten Elektrode 14 ist vorliegend auch zu verstehen, dass mehrere stabförmige Segmente der zweiten Elektrode 14 zylinderförmig um das Filtersieb 13 herum angeordnet sind. Alternativ kann beispielsweise eine bestimmte Anzahl wie beispielsweise zwei oder drei Elektrodenabschnitte der zweiten Elektrode 14 gleichmäßig oder ungleichmäßig verteilt um den Umfang des Filtersiebs 13 an der Seitenwand 20 angeordnet sein.

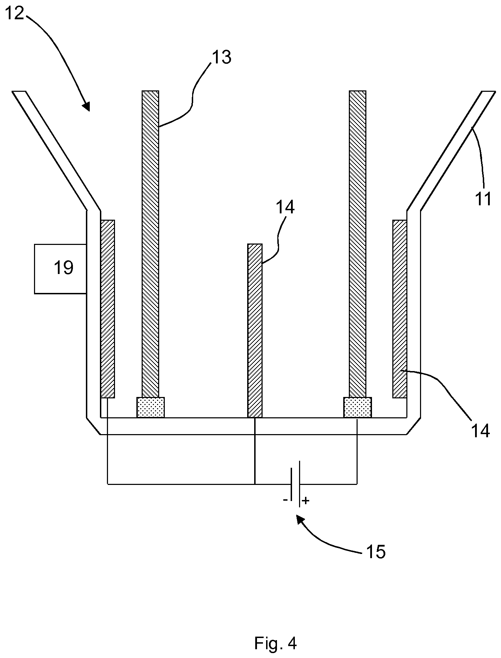

Die Fig. 4 zeigt eine schematische Schnittansicht einer weiteren Ausführungsform der Filteranordnung 12. Die Filteranordnung 12 gemäß der Fig. 4 unterscheidet sich von der Ausführungsform der Filteranordnung 12 gemäß der Fig. 3 dadurch, dass zusätzlich ein Elektrodenabschnitt der zweiten Elektrode 14 analog der Ausführungsform der Filteranordnung 12 gemäß der Fig. 2 innerhalb des Filtersiebs 13 angeordnet ist.

Obwohl die vorliegende Erfindung anhand von Ausführungsbeispielen beschrieben wurde, ist sie vielfältig modifizierbar.

### Verwendete Bezugszeichen:

- 1: Haushaltsgerät
- 2: Spülbehälter
- 3: Tür
- 4: Spülkammer
- 5: Boden
- 6: Decke
- 7: Rückwand
- 8: Seitenwand
- 9: Seitenwand
- 10: Beladungsebene
- 11: Pumpentopf
- 12: Filteranordnung
- 13: Filtersieb
- 14: Elektrode
- 15: Spannungsquelle
- 16: Stirnseite
- 17: Bodenwand
- 18: Kontaktstelle
- 19: Ultraschalleinrichtung
- 20: Seitenwand

## Patentansprüche

1. Filteranordnung (12) für ein wasserführendes Haushaltsgerät (1), insbesondere für eine Geschirrspülmaschine, mit einem als erste Elektrode geschalteten Filtersieb (13) und einer zweiten Elektrode (14), wobei zum elektrochemischen Reinigen des Filtersiebs (13) zwischen dem Filtersieb (13) und der zweiten Elektrode (14) eine elektrische Spannung anlegbar ist.

2. Filteranordnung nach Anspruch 1, **dadurch gekennzeichnet, dass** zum elektrochemischen Reinigen des Filtersiebs (13) an dem Filtersieb (13) mit Hilfe der elektrischen Spannung Gasbläschen erzeugbar sind.

3. Filteranordnung nach Anspruch 1 oder 2, **dadurch gekennzeichnet, dass** das Filtersieb (13) eine Kathode und die zweite Elektrode (14) eine Anode ist.

4. Filteranordnung nach einem der Ansprüche 1 - 3, **dadurch gekennzeichnet, dass** die zweite Elektrode (14) eine bordotierte Diamantelektrode ist.

5. Filteranordnung nach einem der Ansprüche 1 - 4, **dadurch gekennzeichnet, dass** das Filtersieb (13) rohrförmig ist.

6. Filteranordnung nach Anspruch 5, **dadurch gekennzeichnet, dass** die zweite Elektrode (14) stabförmig ist und dass die zweite Elektrode (14) zumindest teilweise in dem Filtersieb (13) aufgenommen ist.

7. Filteranordnung nach Anspruch 5 oder 6, **dadurch gekennzeichnet, dass** die zweite Elektrode (14) rohrförmig ist und dass das Filtersieb (13) zumindest teilweise in der zweiten Elektrode (14) aufgenommen ist.

8. Filteranordnung nach einem der Ansprüche 1 - 7, **dadurch gekennzeichnet, dass** die elektrische Spannung zwischen dem Filtersieb (13) und der zweiten Elektrode (14) gepulst anlegbar ist.

9. Filteranordnung nach einem der Ansprüche 1 - 8, **gekennzeichnet durch** eine Ultraschalleinrichtung (19) zum mechanischen Reinigen des Filtersiebs (13).

10. Filteranordnung nach einem der Ansprüche 1 - 9, **dadurch gekennzeichnet, dass** das Filtersieb (13) aus einem Metallwerkstoff gefertigt ist.

11. Filteranordnung nach einem der Ansprüche 1 - 9, **dadurch gekennzeichnet, dass** das Filtersieb (13) aus einem metallbeschichteten Kunststoffwerkstoff gefertigt ist.

12. Pumpentopf (11) für ein wasserführendes Haushaltsgerät (1), insbesondere für eine Geschirrspülmaschine, mit einer Filteranordnung (12) nach einem der Ansprüche 1 - 11, wobei die Filteranordnung (12) zumindest teilweise in dem Pumpentopf (11) aufgenommen ist.

13. Pumpentopf nach Anspruch 12, **gekennzeichnet durch** zumindest eine elektrische Kontaktstelle (18), mit der das Filtersieb (13) elektrisch leitend verbindbar ist.

14. Spülbehälter (2) für ein wasserführendes Haushaltsgerät (1), insbesondere für eine Geschirrspülmaschine, mit einer Filteranordnung (12) nach einem der Ansprüche 1 - 11 und/oder einem Pumpentopf (11) nach Anspruch 12 oder 13.

15. Wasserführendes Haushaltsgerät (1), insbesondere Geschirrspülmaschine, mit einer Filteranordnung (12) nach einem der Ansprüche 1 - 11, einem Pumpentopf (11) nach Anspruch 12 oder 13 und/oder einem Spülbehälter (2) nach Anspruch 14.

## Claims

1. Filter assembly (12) for a water-bearing domestic appliance (1), in particular for a dishwasher, with a filter screen (13) connected as a first electrode and with a second electrode (14), wherein an electric voltage can be applied between the filter screen (13) and the second electrode (14) for electrochemically cleaning the filter screen (13).

2. Filter assembly according to claim 1, **characterised in that** gas bubbles can be generated on the filter screen (13) with the aid of the electric voltage for electrochemically cleaning the filter screen (13).

3. Filter assembly according to claim 1 or 2, **characterised in that** the filter screen (13) is a cathode and the second electrode (14) is an anode.

4. Filter assembly according to one of claims 1 - 3, **characterised in that** the second electrode (14) is a boron-doped diamond electrode.

5. Filter assembly according to one of claims 1 - 4, **characterised in that** the filter screen (13) is tubular.

6. Filter assembly according to claim 5, **characterised in that** the second electrode (14) is rod-shaped and that the second electrode (14) is accommodated at least partially in the filter screen (13).

7. Filter assembly according to claim 5 or 6, **characterised in that** the second electrode (14) is tubular and that the filter screen (13) is accommodated at least partially in the second electrode (14).

8. Filter assembly according to one of claims 1 - 7, **characterised in that** the electric voltage can be applied pulsed between the filter screen (13) and the second electrode (14).

9. Filter assembly according to one of claims 1 - 8, **characterised by** an ultrasound device (19) for mechanically cleaning the filter screen (13).

10. Filter assembly according to one of claims 1- 9, **characterised in that** the filter screen (13) is produced from a metal material.

11. Filter assembly according to one of claims 1 - 9, **characterised in that** the filter screen (13) is produced from a metal-coated plastic material.

12. Sump (11) for a water-bearing domestic appliance (1), in particular for a dishwasher, with a filter assembly (12) according to one of claims 1 - 11, wherein the filter assembly (12) is accommodated at least partially in the sump (11).

13. Sump according to claim 12, **characterised by** at least one electrical contact point (18), with which the filter screen (13) can be connected in an electrically conducting manner.

14. Washing container (2) for a water-bearing domestic appliance (1), in particular for a dishwasher, with a filter assembly (12) according to one of claims 1 - 11 and/or a sump (11) according to claim 12 or 13.

15. Water-bearing domestic appliance (1), in particular dishwasher, with a filter assembly (12) according to one of claims 1 - 11, a sump (11) according to claim 12 or 13 and/or a washing container (2) according to claim 14.

## Revendications

1. Agencement de filtre (12) pour un appareil ménager (1) à circulation d'eau, notamment pour un lave-vaisselle, comprenant un filtre (13) connecté en tant que première électrode et une deuxième électrode (14), une tension électrique étant applicable entre le filtre (13) et la deuxième électrode (14) pour le nettoyage électrochimique du filtre (13).

2. Agencement de filtre selon la revendication 1, **caractérisé en ce que** pour le nettoyage électrochimique du filtre (13), des petites bulles de gaz peuvent être générées sur le filtre (13) à l'aide de la tension électrique.

3. Agencement de filtre selon la revendication 1 ou 2, **caractérisé en ce que** le filtre (13) est une cathode et **en ce que** la deuxième électrode (14) est une anode.

4. Agencement de filtre selon l'une quelconque des revendications 1 à 3, **caractérisé en ce que** la deuxième électrode (14) est une électrode à diamant dopée au bore.

5. Agencement de filtre selon l'une quelconque des revendications 1 à 4, **caractérisé en ce que** le filtre (13) est tubulaire.

6. Agencement de filtre selon la revendication 5, **caractérisé en ce que** la deuxième électrode (14) est en forme de tige et **en ce que** la deuxième électrode (14) est logée au moins en partie dans le filtre (13).

7. Agencement de filtre selon la revendication 5 ou 6, **caractérisé en ce que** la deuxième électrode (14) est tubulaire et **en ce que** le filtre (13) est logé au moins en partie dans la deuxième électrode (14).

8. Agencement de filtre selon l'une quelconque des revendications 1 à 7, **caractérisé en ce que** la tension électrique est applicable de manière pulsée entre le filtre (13) et la deuxième électrode (14).

9. Agencement de filtre selon l'une quelconque des revendications 1 à 8, **caractérisé par** un dispositif à ultrasons (19) destiné au nettoyage mécanique du filtre (13).

10. Agencement de filtre selon l'une quelconque des revendications 1 à 9, **caractérisé en ce que** le filtre (13) est fabriqué dans un matériau métallique.

11. Agencement de filtre selon l'une quelconque des revendications 1 à 9, **caractérisé en ce que** le filtre (13) est fabriqué dans un matériau en matière plastique revêtu de métal.

12. Puisard (11) pour un appareil ménager (1) à circulation d'eau, notamment pour un lave-vaisselle, comprenant un agencement de filtre (12) selon l'une quelconque des revendications 1 à 11, l'agencement de filtre (12) étant logé au moins en partie dans le puisard (11).

13. Puisard selon la revendication 12, **caractérisé par** au moins un point de contact électrique (18), auquel le filtre (13) est raccordable de manière électroconductrice.

14. Cuve de lavage (2) pour un appareil ménager (1) à circulation d'eau, notamment pour un lave-vaisselle, comprenant un agencement de filtre (12) selon l'une quelconque des revendications 1 à 11 et/ou un puisard (11) selon la revendication 12 ou 13.

15. Appareil ménager (1) à circulation d'eau, notamment lave-vaisselle, comprenant un agencement de filtre (12) selon l'une quelconque des revendications 1 à 11, un puisard (11) selon la revendication 12 ou 13 et/ou une cuve de lavage (2) selon la revendication 14.
